# EUROPÄISCHE PATENTSCHRIFT

(11) **EP 1 520 629 B1**
(45) Veröffentlichungstag und Bekanntmachung des Hinweises auf die Patenterteilung: **14.06.2006**
(21) Anmeldenummer: 04022259.8
(22) Anmeldetag: 18.09.2004
(51) Int. Cl.: B05B 1/18

(54) **Duscheinrichtung**
Shower installation
Installation de douche

(30) Priorität: 01.10.2003 DE 20315306 U
(43) Veröffentlichungstag der Anmeldung: 06.04.2005
(73) Patentinhaber: Aquis Sanitär AG, 9445 Rebstein (CH)
(72) Erfinder: Wawrla, Andreas, 9443 Widnau (CH)
(74) Vertreter: Ostertag, Ulrich

(56) Entgegenhaltungen:
- WO-A-01/54822
- US-A- 5 918 811
- US-A1- 2003 042 332

## Beschreibung

Die Erfindung betrifft eine Duscheinrichtung mit einem Duschkopf, einer zu diesem führenden Speiseleitung und einer mit der letzteren verbundenen vom Duschkopf beabstandeten Steuerarmatur.

Derartige Duscheinrichtungen sind in vielfältiger Form anzutreffen wie beispielsweise in WO0154822 gezeigt. Die Speiseleitung ist in der Regel unter Putz verlegt und die Steuerarmatur befindet sich in Duschen typischerweise in Brusthöhe. Ähnliche Duscheinrichtungen sind aber auch an Badewannen bekannt, wobei die Steuerarmatur einen weiteren Auslaß aufweist, mit dem die Badewanne direkt befüllt werden kann, und wobei die Speiseleitung ein flexibler Schlauch ist.

Als Steuerarmaturen werden in der Regel Mischer verwendet, die Menge und Temperatur des dem Duschkopf zugeführten Wassers einzustellen gestatten. Häufig werden auch thermostatgesteuerte Mischer verwendet.

In derartigen Duscheinrichtungen kann es ähnlich wie in Klimaanlagen dazu kommen, daß sich bei längerem Nichtgebrauch in der Speiseleitung Viren oder Bakterien ansiedeln. Hierdurch wird die Gesundheit der Benutzer gefährdet.

Durch die vorliegende Erfindung soll eine Duscheinrichtung gemäß dem Oberbegriff des Anspruchs 1 so weitergebildet werden, daß die Gefahr derartiger gesundheitlicher Beeinträchtigungen ausgeräumt ist.

Diese Aufgabe ist erfindungsgemäß gelöst durch eine Duscheinrichtung mit den im Anspruch 1 angegebenen Merkmalen.

Bei der erfindungsgemäßen Duscheinrichtung ist die Speiseleitung bis in unmittelbare Nähe des Duschkopfs ständig luftfrei und mit sauberem Wasser gefüllt. Es können sich hier also keine Bakterien und Viren ansiedeln. Trotzdem ist die Betätigung der Dusche von einem gut zugänglichen Ort aus gewährleistet.

Vorteilhafte Weiterbildungen der Erfindung sind Gegenstand von Unteransprüchen.

Bei einer Duscheinrichtung gemäß Anspruch 2 kann das Einstellen der Wassermenge und ggf. das Einstellen der Wassertemperatur und das Öffnen und Schließen des Steuerventils im wesentlichen vom gleichen Ort aus erfolgen. Dies erleichtert dem Benutzer die Handhabung.

Verwendet man gemäß Anspruch 3 als Steuerventil ein Magnetventil, so kann man eine einfache und nur wenig Platz benötigende Steuerleitung verwenden. Diese Leitung kann auch über größere Strecken problemlos beim Einrichten eines Bads oder einer Dusch verlegt werden.

Mit der Weiterbildung der Erfindung gemäß Anspruch 4 wird erreicht, daß das Magnetventil keinen großen Durchströmquerschnitt zu haben braucht. Derartige Magnetventile sind preisgünstig auf dem Markt erhältlich. Auch die Energieversorgung eines kleinen Magnetventils ist einfach und insbesondere auch aus Batterien oder anderen wenig leistungsfähigen Stromquellen möglich.

Bei einer Duscheinrichtung gemäß Anspruch 5 kann das fernbediente Steuerventil auch ohne elektrische Stromquelle betätigt werden. Die Energie zum Verstellen des Steuerventils wird aus der Druckenergie des gesteuerten Wasserstroms entnommen bzw. durch Muskelkraft erbracht.

Dabei ist die Weiterbildung der Erfindung gemäß Anspruch 6 im Hinblick auf einen einfachen Anschluß des Duschkopfs und ein einfaches Verlegen von Speiseleitung und Steuerleitung von Vorteil.

Bei einer Duscheinrichtung gemäß Anspruch 7 braucht man nur eine einzige Leitung zum Duschkopf zu legen.

Die Ausbildung der Erfindung gemäß Anspruch 8 zeichnet sich durch mechanisch besonders einfachen Aufbau aus.

Nachstehend wird die Erfindung anhand von Ausführungsbeispielen unter Bezugnahme auf die Zeichnung näher erläutert. In dieser zeigen:
- Figur 1: eine schematische Darstellung einer Duscheinrichtung;
- Figur 2: ein Blockschaltbild einer abgewandelten Steuerventilanordnung, die anstelle eines in Figur 1 gezeigten Duschkopf-Steuerventils verwendbar ist;
- Figur 3: eine axiale Aufsicht auf ein praktisches Ausführungsbeispiel einer Steuerventilanordnung gemäß Figur 2;
- Figur 4: einen transversalen Schnitt durch einen flexiblen Schlauch mit integrierter Steuerleitung für ein Duschkopf-Steuerventil;
- Figur 5: eine ähnliche Ansicht wie Figur 1, in welcher ein fluidbetätigtes Duschkopf-Steuerventil wiedergegeben ist;
- Figur 6: einen transversalen Schnitt durch eine bevorzugte Ausführung einer doppelten Verbindungsleitung zum Duschkopf, welche einen Speisewasserkanal und einen Steuerdruckkanal aufweist; und
- Figur 7: eine ähnliche Ansicht wie Figur 1, in welcher ein hydromechanisch betätigtes Duschkopf-Steuerventil dargestellt ist.

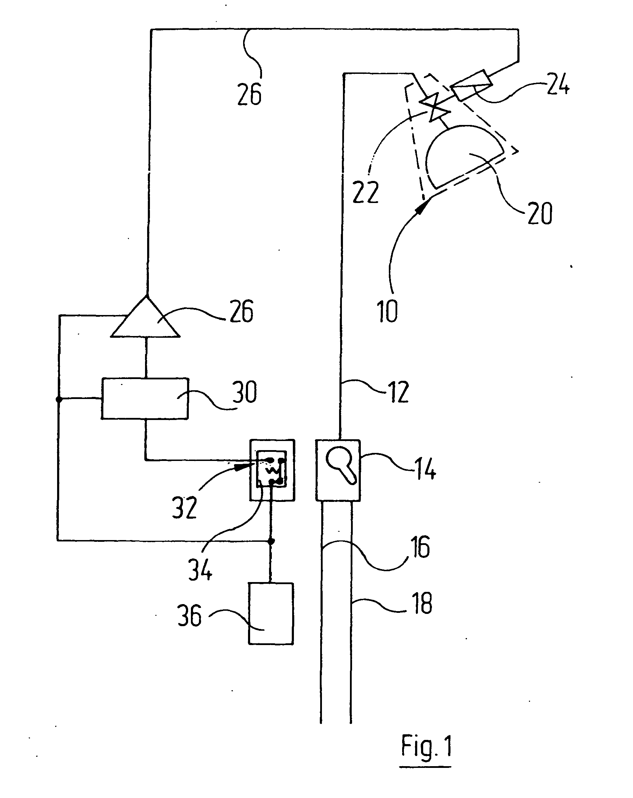

In Figur 1 ist mit 10 insgesamt ein Duschkopf bezeichnet, der über eine Speiseleitung 12 mit einer Mischarmatur 14 verbunden ist, die als Einhebelmischer dargestellt ist. Die Mischarmatur 14 ist eingangsseitig mit einer Kaltwasserleitung 16 und einer Warmwasserleitung 18 verbunden.

Der Duschkopf 10 umfaßt neben dem eigentlichen Brausenteil 20 ein Steuerventil 22, welches in den zum Brausenteil 20 führenden Kanal des Duschkopfgehäuses 10 eingefügt ist. Das Steuerventil 22 ist als Magnetventil dargestellt. Sein Stellmagnet 24 ist über eine Leitung 26 mit dem Ausgang eines Verstärkers 28 verbunden, der vom Ausgang eines einstelligen Binärzählers 30 her angesteuert wird. Der Eingang des Binärzählers 30 ist mit dem Ausgang eines Tasters 32 verbunden, der eine große Betätigungsplatte 34 aufweist.

Ein Eingang des Tasters 32 ist mit dem Ausgang einer Spannungsquelle 36 verbunden. Hierbei kann es sich um eine Batterie, eine fotoelektrische Einrichtung, eine Brennstoffzelle oder auch ein mit Netzspannung betriebenes Feuchtraum-geeignetes Netzteil handeln. Dieses dient zugleich zur Energieversorgung des Binärzählers 30 und des Verstärkers 28 sowie etwaiger weiterer elektrischer Komponenten der Duscheinrichtung, die in der Zeichnung nicht wiedergegeben sind, wie Anzeigen über den Betriebszustand usw.

Die Mischarmatur 14 ist abweichend von sonst üblichen Mischarmaturen so ausgebildet, daß eine gedrosselte Verbindung zwischen der Kaltwasserleitung und der Speiseleitung 12 auch in der "Schließstellung" der Mischarmatur 14 verbleibt. Auf diese Weise ist der Einlaß des Steuerventils 22 stets mit unter Druck stehendem Wasser beaufschlagt.

Die Bedienung der Duscheinrichtung gemäß Figur 1 erfolgt so:

Der Benutzer stellt an der Mischarmatur 14 den gewünschten Durchsatz und die gewünschte Temperatur ein. Dann betätigt er die Betätigungsplatte 34 des Tasters 32, wodurch sich das Ausgangssignal des einstelligen Binärzählers ändert. Entsprechend erhält man am Ausgang des Verstärkers 28 ein Aktivierungssignal für den Stellmagneten 24, so daß das Steuerventil 22 öffnet. Nun wird Wasser mit der gewünschten Temperatur und in der an der Mischarmatur 14 eingestellten Menge vom Brausenteil 20 abgegeben.

Zum Beenden des Duschens wird einfach die Betätigungsplatte 34 nochmals gedrückt, wodurch das Ausgangssignal am Binärzähler 30 verschwindet und damit auch das Speisesignal für den Stellmagneten 24, welches am Ausgang des Verstärkers 28 bereitgestellt wird. In der Speiseleitung 12 bleibt aber ein Druck aufrechterhalten. Diese Leitung bleibt so voll mit Wasser gefüllt, so daß keine Möglichkeit der Bildung von Keimen besteht.

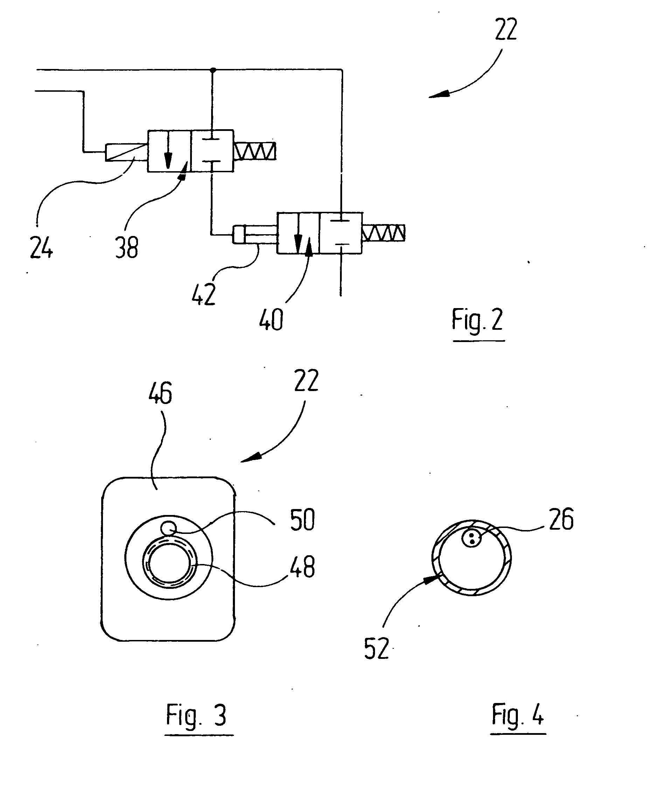

Figur 2 zeigt ein abgewandeltes Steuerventil 22, welches ein Vorsteuerventil 38 und ein Hauptsteuerventil 34 aufweist.

Das Vorsteuerventil 38 ist federnd in die Schließstellung vorgespannt und kann durch Erregung des Stellmagneten 24 in die Offenstellung gebracht werden. Das Hauptventil 40 ist federnd in die Schließstellung vorgespannt und umfaßt einen Stellzylinder 42, welcher mit der Arbeitsöffnung des Vorsteuerventils 38 verbunden ist und bei Druckbeaufschlagung das Hauptsteuerventil 40 entgegen der Federvorspannung in die Offenstellung bewegt.

In Figur 2 sind die Steuerleitung 26 und die Speiseleitung 12 eng benachbart dargestellt. In der Praxis wird man diese beiden Leitungen zu einer einstückig handhabbaren Einheit verbinden, z. B. durch Verkleben, Verschweißen oder mechanisch (z. B. Eindrücken eines flexiblen Steuerkabels in eine Nut, die in der Außenfläche der Speiseleitung 12 vorgesehen ist).

Figur 3 zeigt eine Axialaufsicht auf das Anschlußende eines praktischen Ausführungsbeispiels für ein Steuerventil 22.

Ein einlaßseitiger Anschlußstutzen 44 aus Metall ist in ein Ventilgehäuse 46 eingespritzt. Der Anschlußstutzen 44 hat ein Standardgewinde, welches in ein Standardgewinde der Speiseleitung 12 einschraubbar ist.

Ein dem Anschlußstutzen 44 benachbarter Stutzen 48 des Gehäuses trägt einen elektrischen Kontakt 50, der in sich federnd ausgebildet ist oder durch eine Feder in axialer Auswärtsrichtung vorgespannt ist. Der Kontakt 50 stellt über einen raumfesten Gegenkontakt, der in der Zeichnung nicht wiedergegeben ist, die Verbindung zur Leitung 26 her.

Im Inneren des Ventilgehäuses 46 ist die in Figur 2 gezeigte Ventilanordnung untergebracht.

An seiner zweiten, in Figur 3 hinter der Zeichenebene zu denkenden Stirnfläche hat das Steuerventil 22 einen auslaßseitigen Anschlußstutzen 44, der mit einem Standardgewinde versehen ist, welches das Aufschrauben von Standard-Duschköpfen gestattet.

Mit dem in Figur 3 gezeigten Steuerventil 22 können somit beliebige Standard-Duschköpfe verwendet werden, wobei wiederum gesichert ist, daß sich in der Speiseleitung keine Viren oder Bakterien ansiedeln können.

Das in Figur 3 gezeigte Steuerventil 22 läßt sich auch in Verbindung mit Handbrausen verwenden. In diesem Fall ist dann im Inneren eines flexiblen Speiseschlauchs 52 die als flexibles Kabel ausgebildete Steuerleitung 26 angeordnet. Die von dem Speiseschlauch 52 getragenen herkömmlichen Anschlußarmaturen sind aus Plastikmaterial hergestellt und tragen Flansche mit Kontakten, die mit dem Kontakt 50 des Steuerventils 22 bzw. einem raumfesten in der Zeichnung nicht dargestellten Kontakt zusammenarbeiten, der beim Brausenanschluß der Mischarmatur 14 vorgesehen ist.

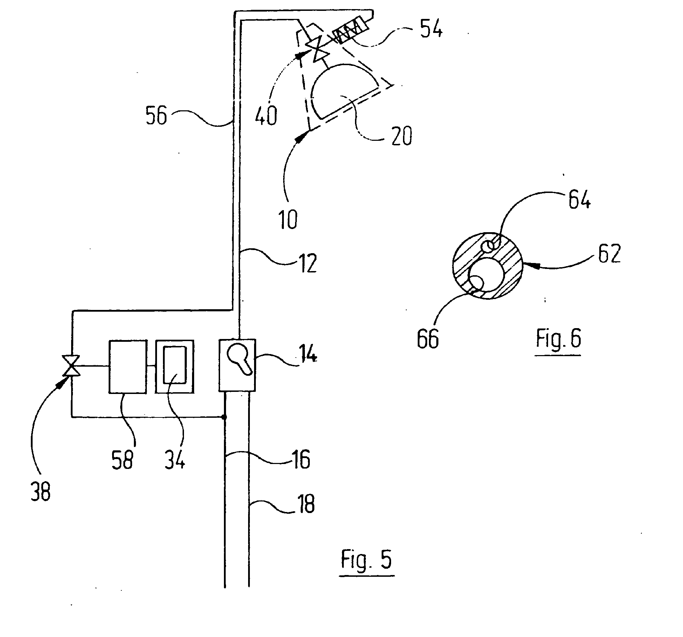

Figur 5 zeigt ein abgewandeltes Ausführungsbeispiel mit fluidischer Betätigung des Steuerventils 22. Teile der Duscheinrichtung, die unter Bezugnahme auf Figur 1 schon erläutert wurden, sind wieder mit den selben Bezugszeichen versehen und werden nachstehend nicht nochmals detailliert beschrieben.

Das Steuerventil 22 hat nun einen Stellzylinder 54, der logisch dem Stellzylinder 42 von Figur 2 entspricht. Das in Figur 2 gezeigte Vorsteuerventil 38 ist aber nun vom Duschkopf entfernt angeordnet und über eine fluidische Steuerleitung 56 angeschlossen, die bis in die Nähe der Mischarmatur 14 geführt ist. Dort befindet sich das Vorsteuerventil 38 in unmittelbarer Nachbarschaft der Mischarmatur 14. Das Vorsteuerventil 38 ist nun kein Magnetventil sondern ein mechanisch betätigtes Ventil. Die Betätigung erfolgt von der Betätigungsplatte 34 her, die über ein Zweistellungsgetriebe 58 mechanisch mit dem Stellglied des Vorsteuerventils 38 verbunden ist. Das Zweistellungsgetriebe 58 kann ähnlich ausgebildet sein, wie von der Verstellung von Kugelschreiberminen her bekannt. Bei jeder Betätigung seines Eingangsgliedes wird die Lage des Ausgangsgliedes zwischen zwei unterschiedlichen Endlagen verändert.

Das Ausführungsbeispiel nach Figur 5 arbeitet genauso wie dasjenige nach Figur 1. Man benötigt aber keinerlei elektrische Einrichtungen.

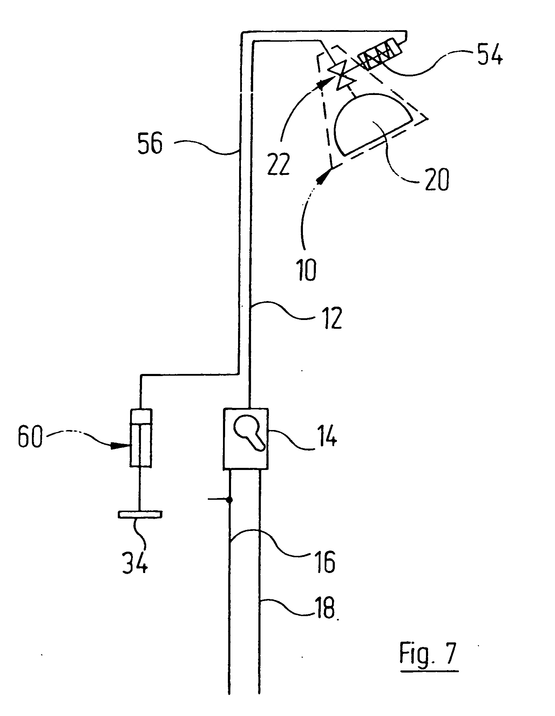

In weiterer Abwandlung des Ausführungsbeispiels nach Figur 5 kann man gemäß Figur 7 bei dem der Mischarmatur benachbarten Ende der Steuerleitung 56 einen Geberzylinder 60 vorsehen. Die Steuerleitung 56 und die Arbeitsräume des Betätigungszylinders 54 und des Geberzylinders 60 sind mit einem geschlossenen Volumen einer Betätigungsflüssigkeit gefüllt, die Wasser oder auch ein Hydrauliköl sein kann. Die Betätigung des Hauptventils 40 erfolgt durch ein verschiebbares Betätigungsglied 34, welches mechanisch mit dem Kolben des Geberzylinders 60 gekoppelt ist.

Figur 6 zeigt einen transversalen Schnitt durch ein zweikanaliges Rohr, welches aus extrudiertem Aluminium oder einer extrudierten Aluminiumlegierung oder einem extrudierten Kunststoffmaterial hergestellt sein kann. Dieses zweikanalige Rohr 62 hat einen Steuerkanal 64, welcher die Steuerleitung 56 bildet, sowie einen Wasserkanal 66, der die Speiseleitung 12 bildet.

Auf diese Weise kann man die gesamte Installation zwischen Betätigungsort und Befestigungsort des Duschkopfes 10 in einem einzigen Schlitz einer Mauer unterbringen.

Anstelle des in Figur 1 gezeigten Steuerventiles 22 kann auch ein monostabiles Magnetventil verwendet werden. Dieses wird bevorzugt dann eingesetzt, wenn die Spannungsquelle 36 ein Netzteil ist oder aus einem solchen gespeist wird.

Ist die Spannungsquelle 36 dagegen eine Batterie oder ein Akkumulator, wird als Steuerventil 22 vorzugsweise ein bistabiles Magnetventil verwendet.

Obenstehend wurde die elektrische Betätigung des Steuerventiles 22 unter Bezugnahme auf den Taster 32 beschrieben.

Es versteht sich, daß anstelle des Tasters 32 auch beliebige andere Fühler verwendet werden können, die von einem Benutzer zur gezielten Abgabe eines elektrischen Signales veranlasst werden können. Hierzu gehören in erster Linie IR-Lichtschranken, optische Sensoren, andere Gegenwartsfühler wie Radar-Sensoren, Ultraschalls-Sensoren usw..

## Patentansprüche

1. Duscheinrichtung mit einem Duschkopf (10), einer zu diesem führenden Speiseleitung (12) und einer mit dieser verbundenen vom Duschkopf (10) beabstandeten Steuerarmatur (14), **dadurch gekennzeichnet, daß** die Speiseleitung (12) in der Nachbarschaft von deren duschkopfseitigen Ende ein fernbedientes Steuerventil (22) aufweist.

2. Duscheinrichtung nach Anspruch 1, **dadurch gekennzeichnet, daß** ein Betätigungsteil (34) für das Steuerventil (22) in der Nachbarschaft der Steuerarmatur (14) angeordnet oder in diese integriert ist.

3. Duscheinrichtung nach Anspruch 1 oder 2, **dadurch gekennzeichnet, daß** das Steuerventil (22) einen Stellmagneten (24) umfaßt.

4. Duscheinrichtung nach Anspruch 3, **dadurch gekennzeichnet, daß** der Stellmagnet (24) ein Vorsteuerventil (38) betätigt, dessen Arbeitsöffnung mit einem Stellzylinder (42) eines Hauptsteuerventils (40) verbunden ist.

5. Duscheinrichtung nach Anspruch 1 oder 2, **dadurch gekennzeichnet, daß** das Steuerventil (22) einen Betätigungszylinder (54) aufweist, der über eine Steuerleitung (56) mit einem Vorsteuerventil (38) oder einem Geberzylinder (60) verbunden ist, welche durch das Betätigungsteil (34) betätigbar sind.

6. Duscheinrichtung nach Anspruch 5, **dadurch gekennzeichnet, daß** die Steuerleitung (56) und die Speiseleitung (12) zu einer Einheit zusammengefaßt sind.

7. Duscheinrichtung nach Anspruch 6, **dadurch gekennzeichnet, daß** die Steuerleitung (56) und die Speiseleitung (12) zumindest teilweise durch ein Rohr (62) gebildet sind, welches zwei Kanäle (64, 68) aufweist.

8. Duscheinrichtung nach Anspruch 1 oder 2, **dadurch gekennzeichnet, daß** ein Stellteil des Steuerventiles (22) über eine mechanische oder fluidische Kraftübertragunsstrecke (54, 56, 60) mit einem der Mischarmatur (14) benachbarten Betätigungsglied (34) verbunden ist.

## Claims

1. Shower device comprising a showerhead (10), a feed line (12) leading thereto and a control fitting (14) connected to the feed line (12) and spaced apart from the showerhead (10), **characterised in that** the feed line (12) has a remotely-controlled control valve (22) in the vicinity of its end on the showerhead side.

2. Shower device according to claim 1, **characterised in that** an actuating part (34) for the control valve (22) is arranged in the vicinity of the control fitting (14) or is integrated therein.

3. Shower device according to claim 1 or 2, **characterised in that** the control valve (22) comprises a control magnet (24).

4. Shower device according to claim 3, **characterised in that** the control magnet (24) actuates a pre-control valve (38), the working aperture of which is connected to a control cylinder (42) of a main control valve (40).

5. Shower device according to claim 1 or 2, **characterised in that** the control valve (22) has an actuating cylinder (54) connected via a control line (56) to a pre-control valve (38) or a transmitter cylinder (60), which can be actuated by the actuating part (34).

6. Shower device according to claim 5, **characterised in that** the control line (56) and the feed line (12) are combined to form one unit.

7. Shower device according to claim 6, **characterised in that** the control line (56) and the feed line (12) are at least partially formed by a pipe (62) which has two ducts (64, 68).

8. Shower device according to claim 1 or 2, **characterised in that** a control part of the control valve (22) is connected via a mechanical or fluidic force transmission route (54, 56, 60) to an actuating member (34) adjacent to the mixer fitting (14).

## Revendications

1. Installation de douche avec une pomme de douche (10), une conduite d'alimentation (12) menant à celle-ci et une robinetterie de commande (14) reliée à cette dernière à distance de la pomme de douche (10), **caractérisée par le fait que** la conduite d'alimentation (12) présente au voisinage de son extrémité côté pomme de douche une vanne de commande (22) commandée à distance.

2. Installation de douche selon la revendication 1, **caractérisée par le fait qu'**une partie d'actionnement (34) pour la vanne de commande (22) est disposée au voisinage de la robinetterie de commande (14) ou intégrée dans celle-ci.

3. Installation de douche selon la revendication 1 ou 2, **caractérisée par le fait que** la vanne de commande (22) comprend un électro-aimant de commande (24).

4. Installation de douche selon la revendication 3, **caractérisée par le fait que** l'électro-aimant de commande (24) actionne une vanne pilote (38) dont l'ouverture de travail est en communication avec un cylindre de commande ou de réglage (42) d'une vanne de commande principale (40).

5. Installation de douche selon la revendication 1 ou 2, **caractérisée par le fait que** la vanne de commande (22) présente un cylindre d'actionnement (54) qui est relié par une conduite de commande (56) à une vanne pilote (38) ou à un maître-cylindre (60) qui peut être actionné(e) par la partie d'actionnement (34).

6. Installation de douche selon la revendication 5, **caractérisée par le fait que** la conduite de commande (56) et la conduite d'alimentation (12) sont regroupées en une unité.

7. Installation de douche selon la revendication 6, **caractérisée par le fait que** la conduite de commande (56) et la conduite d'alimentation (12) sont formées au moins partiellement par un tube (62) qui présente deux canaux (64, 68).

8. Installation de douche selon la revendication 1 ou 2, **caractérisée par le fait qu'**une partie de commande ou organe de commande de la vanne de commande (22) est relié par une section de transmission de force mécanique ou fluidique (54, 56, 60) à un organe d'actionnement (34) voisin de la robinetterie mélangeuse (14).
